# EUROPEAN PATENT APPLICATION

(11) **EP 2 695 917 A2**
(43) Date of publication of application: **12.02.2014**
(21) Application number: 13003693.2
(22) Date of filing: 23.07.2013
(51) Int. Cl.: C09C 3/12, C09C 1/30

(54) **Method for manufacturing a dispersion of hollow particles, an antireflective film, and an optical element**

(30) Priority: 08.08.2012 JP 2012176026
(71) Applicant: Canon Kabushiki Kaisha, Tokyo 146-8501 (JP)
(72) Inventor: Kameno, Yu, Tokyo 146-8501 (JP)
(74) Representative: Weser, Wolfgang

(57) **Abstract**

A method for manufacturing a dispersion of hollow particles includes producing a core-shell type particle by forming a shell made mainly of an inorganic-based compound on a surface of a particle made mainly of an organic compound in an aqueous medium, and obtaining the dispersion of the hollow particles formed of the shell by hydrophobizing the core-shell type particles and extracting the core-shell type particles with an aromatic organic solvent.

## Description

### BACKGROUND OF THE INVENTION

### Field of the Invention

The present invention relates to a method for manufacturing a dispersion of hollow particles with a low refractive index. The present invention also relates to a method for manufacturing an antireflective film and a method for manufacturing an optical element.

### Description of the Related Art

A method for forming a film with a low refractive index on a surface using a material with a low refractive index is known as a method for reducing reflected light on a surface of an optical element such as a lens of a camera. A dry film-forming method in which a film is formed using a material with a low refractive index in vacuum by sputtering or vapor deposition is available as a method for forming the film with a low refractive index. A wet film-forming method is also available in which particles with a low refractive index are formed in a liquid phase, subsequently mixed with paint, and then a film is formed by dip coating or spin coating. Considering cost for forming the film with the low refractive index, the latter method is more advantageous.

The particles with the low refractive index used in the wet film-forming method include hollow particles formed of silica. A method in which a core-shell type particle is made and then a core portion is removed is available as a method for manufacturing the hollow particle. In Japanese Patent No. 4046921, it has been discussed that the core-shell type particle is made by using aluminium oxide or calcium carbonate as a core of the particle and synthesizing silica outside thereof, and subsequently the core is ionized to be removed. In Japanese Patent Application Laid-Open No. 2009-234848, it has been discussed that the core-shell type particle is made by using a polymerized organic polymer particle as the core and synthesizing silica outside thereof, and subsequently the core is burned to be removed.

However, the method in Japanese Patent No. 4046921 is problematic in that an inorganic particle is used for the core, thus the particles are variable in size and shape, and light scattering is increased in an antireflective film after the wet film formation. In the method in Japanese Patent Application Laid-Open No. 2009-234848, the variation in size and shape is improved because a polymerized organic particle is used for the core. However, this method is also problematic in that aggregated hollow particles are obtained because the core-shell particles in an aqueous medium are heated and dried, and the scattering is increased when such hollow particles are used for the antireflective film.

### SUMMARY OF THE INVENTION

The present invention is directed to a method for manufacturing a dispersion of hollow particles.

Specifically, the present invention is directed to a method for manufacturing a dispersion of hollow particles, in which a shell is formed on a surface of a core particle formed of an organic compound to make a core-shell type particle and, subsequently, the core can be removed so that the particles are less likely to aggregate one another.

The present invention is also directed to a method for manufacturing an antireflective film including a step of applying the hollow particles obtained by the above method, and is further directed to a method for manufacturing an optical element including a step of forming the antireflective film on a surface of an optical member.

According to an aspect of the present invention, there is provided a method for manufacturing a dispersion of hollow particles as specified in claims 1 to 7.

According to another aspect of the present invention, there is provided a method for manufacturing an antireflective film as specified in claim 8.

According to yet another aspect of the present invention, there is provided a method for manufacturing an optical element as specified in claim 9.

Further features of the present invention will become apparent from the following description of exemplary embodiments with reference to the attached drawings.

### BRIEF DESCRIPTION OF THE DRAWINGS

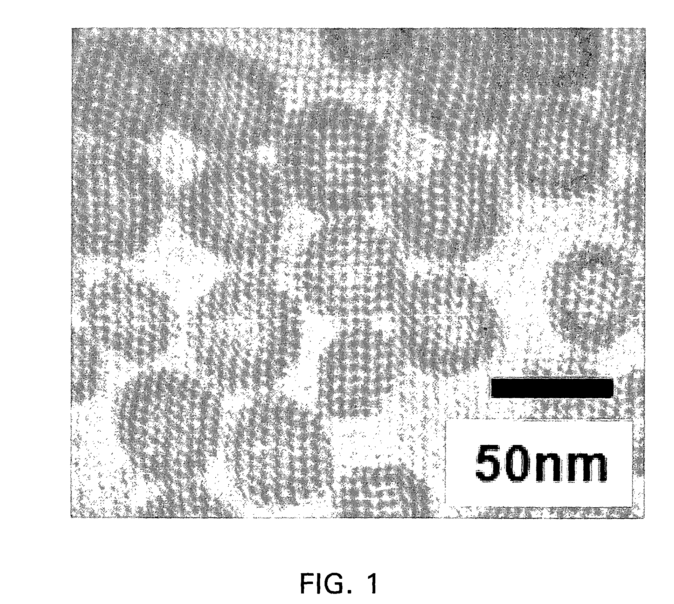

Fig. 1 illustrates a photograph of hollow particles obtained in a first exemplary embodiment under a scanning transmission electron microscope.

### DESCRIPTION OF THE EMBODIMENTS

The present invention relates to a method for manufacturing a dispersion of hollow particles capable of reducing light scattering.

The method for manufacturing the dispersion of the hollow particles according to exemplary embodiments of the present invention including a step of forming a shell on a surface of a core particle formed of an organic compound to form a core-shell type particle in an aqueous medium, and a step of treating the formed core-shell type particle with a hydrophobizing agent followed by extracting the treated core-shell type particle with an aromatic organic solvent to obtain the dispersion of the hollow particles formed of the shell. The core-shell type particle herein refers to a particle having the core (inner core) and the shell (outer shell) having a different composition each other.

The method for manufacturing the dispersion of the hollow particles according to the exemplary embodiments of the present invention includes a first step of forming a core particle made mainly of the organic compound in the aqueous medium, a second step of forming the shell on the surface of the core particle to form the core-shell type particle, a third step of hydrophobizing the core-shell type particle, and a fourth step of extracting the hydrophobized core-shell type particle with the aromatic organic solvent to obtain the dispersion of the hollow particles formed of the shell. The method for manufacturing the antireflective film according to the exemplary embodiments of the present invention includes a fifth step of coating the hollow particles to make the antireflective film subsequent to the first step to the fourth step. The first step to the fifth step will be described in detail below.

[First step (step of forming core particle)] In the first step, the core particle made mainly of the organic compound is formed. Specifically, a monomer is polymerized in the aqueous medium to form the core particle. The core particle made mainly of the organic compound herein refers to the core particle in which the organic compound is contained in an amount of 51% by mass or more. A content of the organic compound in the core particle is desirably 80% by mass or more and more desirably 90% by mass or more.

As a technique to form the core particle, it is desirable to use emulsion polymerization in which latex particles that are relatively even in particle size are obtained. As the monomer for the emulsion polymerization, it is desirable to use a styrene monomer, an acrylic ester monomer or a vinyl acetate monomer Considering stability in the aqueous medium, it is more desirable to use an olefin monomer that contains no oxygen atom, and it is still more desirable to use a styrene monomer. A water-soluble surfactant is desirable as a surfactant used for the emulsion polymerization. As the water-soluble surfactant, an amine salt or a quaternary ammonium salt can be used in the case of a cationic surfactant, and a carboxylic salt, a sulfonic salt or a phosphate salt, which are typified by soap, can be used in the case of an anionic surfactant. A water-soluble polymerization initiator is desirable as a polymerization initiator. Among the water-soluble polymerization initiators, an azo-based polymerization initiator can be used as a cationic polymerization initiator, and a persulfate can be used as an anionic polymerization initiator.

Both of the surfactant and the polymerization initiator are desirably either one of cationic and anionic so that the reaction progresses stably. Cationic ones or anionic ones can be appropriately selected depending on a material for the shell synthesized in the second step. When the material for the shell is made mainly of silicon oxide, it is desirable to use the cationic surfactant and the cationic polymerization initiator.

A number average particle diameter of the core particles is desirably 10 nm or more and 200 nm or less. When the number average particle diameter is smaller than 10 nm, variation in average particle size becomes large. When the number average particle diameter is larger than 200 nm, light scattering on the antireflective film obtained in the fifth step easily occurs, and the performance of the antireflective film used for the optical element is easily reduced. Also, as the particle diameter of the core particle increases, the shape of the shell formed in the second step is easily deformed when the core particle is removed in the third step or thereafter. Therefore, to obtain the uniform antireflective film, the number average particle diameter of the core particles is more desirably 10 nm or more and 50 nm or less. The core particles desirably configure a monodisperse particle group in which a polydispersity index is 0.200 or less. When the polydispersity index of the core particles is larger than 0.200, the variation in particle diameters becomes large, and the light scattering on the antireflective film obtained in the fifth step tends to occur. Thus, the performance of the antireflective film is easily reduced when it is used for the optical element.

The particle diameter of the particle herein is represented as the number average particle diameter obtained by randomly selecting 30 or more particles on photographs obtained using a scanning transmission electron microscope (HD2300 manufactured by Hitachi High-Technologies Corporation), measuring a maximum chord length of a particle in a horizontal direction, calculating their mean value as the particle diameter, and further calculating the number average particle diameter. As the polydispersity index, a value obtained by analyzing by a cumulant method an autocorrelation function obtained from changes of scattering strength with time when a particle diameter distribution is analyzed using a dynamic light scattering apparatus is used.

### [Second step (step of forming core-shell type particle)]

In the second step, the shell is made on the surface of the core particle obtained in the first step in the aqueous medium to form the core-shell type particle. It is desirable that the shell be made mainly of an inorganic-based compound. The shell made mainly of the inorganic compound is the shell containing the inorganic compound in an amount of 51% by mass or more. The content of the inorganic compound in the shell is desirably 80% by mass or more and more desirably 90% by mass or more. The inorganic-based compound herein refers to the inorganic compound and a compound containing an inorganic component. The compound containing the inorganic component includes organic/inorganic hybrid materials. As the inorganic compound, it is desirable to use silica. As the inorganic-based compound, it is desirable to use a siloxane-based compound. As the siloxane compound, it is desirable to use polysiloxane.

In the second step, for example, a siloxane compound is formed from a silane compound in the aqueous medium to form the shell on the surface of the core particle. The aqueous medium herein contains water in an amount of at least 50% by mass or more, desirably 80% by mass or more and 100% by mass or less, and more desirably 90% by mass or more and 100% by mass or less.

The shell is desirably made of a unit represented by R_{y}SiO_{z} (R represents a hydrocarbon group, 0≤y≤1, 1≤z≤2).

The R_{y}SiO_{z} component can be obtained by using silicon alkoxide as the silane compound, hydrolyzing silicon alkoxide, and condensing a silanol compound. For example, tetraalkoxysilane typified by tetramethoxysilane and triethoxysilane, alkyltrialkoxysilane typified by methyltrimethoxysilane and methyltriethoxysilane, or mixtures thereof are included. Alkyltrialkoxysilane, reactivity of which is easily controlled, is desirable. To inhibit the aggregation due to crosslinking of shells one another, it is desirable to make the aqueous solution weakly basic and then keep temperature at 40°C or below to hydrolyze alkyltrialkoxysilane. The core-shell type particle desirably has the number average particle diameter of 20 nm or more and 210 nm or less. When the number average particle diameter of the core-shell type particle is larger than 210 nm, the light scattering on the antireflective film obtained in the fifth step tends to occur, and thus the performance of the antireflective film is easily reduced when it is used for the optical element.

Further, a number average thickness of the shell in the core-shell type particle is desirably 2 nm or more and 10 nm or less. When the number average thickness of the shell is less than 2 nm, the strength of the shell is reduced, and the shell is easily broken down when the core is removed in the third step, which is not desirable. When the number average thickness of the shell is more than 10 nm, it becomes difficult to remove the core in the third step or thereafter, which is not desirable. It is confirmed by a transmission electron microscope that the shell has been formed on an outer circumference of the core. A transmittance of an electron ray is generally higher in the organic compound than in the inorganic compound, and thus the organic compound exhibits a brighter contrast. Thus, a core portion and a shell portion can be distinguished by their contrast difference. When an elemental component analysis is also carried out during the observation of the transmission image, it is also possible to confirm constituent materials of the shell by detecting the components, such as silicon and oxygen that constitute the shell.

### [Third step (step of hydrophobizing core-shell type particle)]

In the third step, a hydrophobizing treatment is given to the core-shell type particle obtained in the second step. The hydrophobizing treatment is carried out by treating the core-shell type particle with a hydrophobizing agent. An organic metal compound, such as a silane coupling agent, a titanium coupling agent, a zirconium coupling agent, and a silylation agent, can be used as the hydrophobizing agent. Among them, the silane coupling agent or the silylation agent is desirable because a strong binding to the surface of the core particle is possible to make the removal of the core particle easy in the fourth step. The silane coupling agent to be used includes difunctional alkoxide such as vinyldimethylacetoxysilane, dimethyldiethoxysilane, dimethyldimethoxysilane, diphenyldiethoxysilane, 1,3-divinyltetramethyldisiloxane, 1,3-diphenyltetramethyldisiloxane, and dimethylpolysiloxane having 2 to 12 siloxane units in one molecule and containing a hydroxyl group bound to one silicon atom per unit located at an end, trifunctional alkoxide such as methyltrimethoxysilane, methyltriethoxysilane, ethyltrimethoxysilane, and ethyltriethoxysilane, and tetrafunctional alkoxide such as tetramethoxysilane and tetraethoxysilane. Of these, the trifunctional alkoxide is more desirable if the subsequent separation step is considered, because this is less likely to form unnecessary polysiloxane and particles. The silylation agent includes hexamethyldisilazane (HMDS), trimethylsilane, trimethylchlorosilane, trimethylethoxysilane, dimethyldichlorosilane, methyltrichlorosilane, allyldimethylchlorosilane, allylphenyldichlorosilane, benzyldimethylchlorosilane, bromomethyldimethylchlorosilane, α-chloroethyl trichlorosilane, β-chloroethyl trichlorosilane, chloromethyldimethylchlorosilane, triorganosilylmercaptan, trimethylsilylmercaptan, triorganosilyl acrylate, n-trimethylsilyl imidazole, bis(trimethylsilyl)urea, trimethylsilyl amide, and bistrimethylsilyl acetamide. Of these, it is more desirable to use the chlorosilane compound due to reactivity for silylation.

### [Fourth step (step of extracting hollow particle with organic solvent)]

In the fourth step, the core-shell type particle treated with the hydrophobizing agent in the third step is dissolved in the organic solvent to obtain the dispersion of the hollow particles formed of the shell. It is desirable to use the organic solvent in which the core component is easily dissolved, as the organic solvent. Specifically, it is desirable to use the aromatic organic solvent such as benzene, toluene, xylene and naphthalene. The third step and the fourth step may be carried out simultaneously by using the aromatic organic solvent in which the hydrophobizing agent for the core has been previously dissolved. The removal of the core component can be confirmed by performing Fourier transform infrared spectrometry after washing the particles before and after the fourth step and by comparing acquired spectra. When the core component has been removed, no absorption peak specific for the core component is detected. The hollow particle desirably configures the monodisperse particle group in which the polydispersity index is 0.200 or less.

[Fifth step (step of making antireflective film)] An antireflective film with a low refractive index can be made by coating the hollow particles obtained in the fourth step on a base material. An antireflective film with low scattering can also be made by coating the dispersion of the hollow particles having the small particle diameter on the base material. When the hollow particles are coated using a volatile organic solvent, the antireflective film is formed of hollow silica particles, an outside of the particle is air, and thus the refractive index of the film can be reduced drastically. To increase the strength, it is also possible to use a solvent with a low refractive index, such as a sol-gel solution that forms a silica skeleton. It is also possible to obtain an antireflective film in which the strength is further enhanced by dispersing the hollow particles formed by the manufacturing method of the exemplary embodiments of the present invention in such a solvent and coating the base material with the resulting dispersion.

As a costing method, an application method for the dispersion, such as spin coating, bar coating and dip coating, is desirable in terms of easiness and low production costs. It is also possible to form a film using the hollow particles, which are obtained by the manufacturing method of the exemplary embodiments of the present invention, by a method such as sputtering and vapor deposition to use the film as the antireflective film.

Plastic or glass can be used as the base material. It is possible to obtain an optical element in which a reflectance on its surface is drastically reduced by forming the antireflective film on a transparent material such as plastic or glass.

The exemplary embodiments of the present invention will be described below, but the present invention is not limited to the scope of these exemplary embodiments.

The following measurement methods are employed in the exemplary embodiments.

### A first exemplary embodiment will be described below. [First step]

Polystyrene particles that became core particles were synthesized using styrene. To a reaction solution, 235 g of water and 5 g of an aqueous solution of 0.01 g/mL cetyltrimethylammonium bromide (hereinafter, CTAB) were added, subsequently nitrogen gas was introduced, and the solution was heated at temperature of 80°C under an atmosphere of the nitrogen gas. After heating, 2 mL of styrene was added followed by being stirred for 5 minutes, and further 6 mL of an aqueous solution of 0.1 g/mL 2,2'-azobis(2-amidinopropane) hydrochloride (hereinafter, AIBA) that was a polymerization initiator for styrene was added, and the mixture was stirred for 4 hours. This afforded a dispersion of core particles formed of polystyrene and having a number average particle diameter of 30 nm. The core particles formed of polystyrene exhibited a monodisperse particle size distribution in which a polydispersity index was 0.009.

### [Second step]

To 14 mL of the dispersion of the core particles formed of polystyrene obtained in the first step, 10 mL of water, 1.5 mL of 0.01 g/mL L(+)-lysine, 10 mL of n-octane, and 1.24 mL of triethoxymethylsilane were added, and the mixture was stirred for 16 hours. An n-octane layer including unreacted triethoxymethylsilane was removed to obtain a dispersion of core-shell type particles having an average shell thickness of 4 nm and a number average particle diameter of 38 nm in an aqueous medium. The core-shell type particles exhibited the monodisperse particle size distribution in which the polydispersity index was 0.019.

### [Third step]

As a hydrophobizing agent, 1 g of n-octyldimethylchlorosilane (manufactured by Tokyo Chemical Industry Co., Ltd.) was added to the dispersion of the core-shell type particles.

### [Fourth step]

To the aqueous dispersion obtained in the third step, 10 g of toluene was added, and the mixture was stirred for 2 hours. After being left to stand for 24 hours, no precipitation was identified in a toluene layer, and the particles were dispersed. The polydispersity index of the particles dispersed in the toluene layer was measured, and it was 0.023. Then, 0.3 g of the toluene layer was sampled, dried, and observed using a scanning transmission electron microscope. Consequently, hollow particles formed of polysiloxane and having a number average particle diameter of 38 nm were identified. A transmission electron image of the hollow particles is shown in Fig. 1.

The particles before and after the fourth step were washed, heated and dried on an Si wafer at temperature of 130°C, and measured by Fourier transform infrared spectrometry. Both a peak derived from a carbon-carbon double bond in polystyrene and a peak derived from silicon-carbon, silicon-oxygen, and silicon-carbon bonds in polysiloxane were detected in the particles before the fourth step. However, in the particles after the fourth step, although the peak derived from the bonds in polysiloxane was detected, the peak derived from the bond in polystyrene was below detection sensitivity.

Hereinafter, a second exemplary embodiment will be described.

### [First step to third step]

These steps were carried out in the same manner as in the first embodiment.

### [Fourth step]

The forth step was carried out in the same manner as in the first exemplary embodiment, except that xylene (manufactured by Tokyo Chemical Industry Co., Ltd.) was used as the aromatic organic solvent to be used in the fourth step. No precipitation was identified in a xylene layer obtained in the fourth step, and the particles were dispersed. Then, 0.3 g of the xylene layer was sampled, dried, and observed using the scanning transmission electron microscope. Consequently, hollow particles formed of polysiloxane and having the number average particle diameter of 38 nm were identified. The polydispersity index of the particles in the dispersion was 0.023.

Hereinafter, a third exemplary embodiment will be described.

### [First step]

The first step was carried out in the same manner as in the first exemplary embodiment.

### [Second step]

The second step was carried out in the same manner as in the first exemplary embodiment, except that the stirring time period in the second step was changed from 16 hours to 8 hours. The resulting core-shell type particles had the average shell thickness of 2 nm and the number average particle diameter of 34 nm. The polydispersity index of the core-shell type particles was 0.018.

### [Third step to fourth step]

The third step and the fourth step were carried out in the same manner as in the first exemplary embodiment. No precipitation was identified in the toluene layer, and the particles were dispersed. Then, 0.3 g of the toluene layer was sampled, dried, and observed using the scanning transmission electron microscope. Consequently, hollow particles having the number average particle diameter of 34 nm were identified. The polydispersity index of the particles in the dispersion was 0.021.

Hereinafter, a fourth exemplary embodiment will be described.

### [First step]

The first step was carried out in the same manner as in the first exemplary embodiment.

### [Second step]

The second step was carried out in the same manner as in the first embodiment, except that the stirring time period in the second step was changed from 16 hours to 36 hours. The resulting core-shell type particles had the average shell thickness of 7 nm and the number average particle diameter of 42 nm. The polydispersity index of the core-shell type particles was 0.021.

### [Third step to fourth step]

The third step and the fourth step were carried out in the same manner as in the first exemplary embodiment. No precipitation was identified in the toluene layer, and the particles were dispersed. Then, 0.3 g of the toluene layer was sampled, dried, and observed using the scanning transmission electron microscope. Consequently, the core-shell type particles occupied 47% and the hollow particles occupied 53%.

Hereinafter, a fifth exemplary embodiment will be described.

### [First step]

The first step was carried out in the same manner as in the first embodiment, except that an amount of AIBA to be added in the first step was changed from 6 mL to 1.5 mL. A dispersion of core particles having the number average particle diameter of 70 nm and formed of polystyrene was obtained. The core particles formed of polystyrene had the polydispersity index of 0.007 and exhibited the monodisperse particle size distribution.

### [Second step]

The second step was carried out in the same manner as in the first exemplary embodiment, except that the stirring time period in the second step was changed from 16 hours to 48 hours. The resulting core-shell type particles had the average shell thickness of 7 nm and the number average particle diameter of 84 nm. The polydispersity index of the core-shell type particles was 0.018.

### [Third step to fourth step]

The third step and the fourth step were carried out in the same manner as in the first exemplary embodiment. No precipitation was identified in the toluene layer, and the particles were dispersed. Then, 0.3 g of the toluene layer was sampled, dried, and observed using the scanning transmission electron microscope. Consequently, the core-shell type particles occupied 57% and the remaining 47% was occupied by hollow particles in which the shell was partially deformed toward a center direction of the particle.

Hereinafter, a first comparative example will be described.

### [First step]

The first step was carried out in the same manner as in the first exemplary embodiment to obtain a dispersion of core particles formed of polystyrene and having the number average particle diameter of 30 nm and the polydispersity index of 0.009.

### [Second step]

The second step was carried out in the same manner as in the first exemplary embodiment. A dispersion of core-shell type particles having the average shell thickness of 4 nm and the number average particle diameter of 38 nm in an aqueous medium was obtained. The core-shell type particles had the polydispersity index of 0.019 and exhibited the monodisperse particle size distribution.

### [Third step]

In the first comparative example, the forth step was carried out without treating the core-shell type particles with the hydrophobizing agent.

### [Fourth step]

Toluene was added to the aqueous dispersion of the core-shell type particles obtained in the second step, and the dispersion was stirred for 24 hours. Then, 0.3 g of the toluene layer was sampled, dried, and observed using the scanning transmission electron microscope. Consequently, no particle was identified. Also, 0.3 g of the aqueous layer was sampled, dried and observed. Consequently, core-shell type particles having the number average particle diameter of 38 nm and the polydispersity index of 0.019 were identified.

Hereinafter, a second comparative example will be described.

### [First step to second step]

The first step and the second step were carried out in the same manner as in the first exemplary embodiment.

### [Third step]

In the second comparative example, the forth step was carried without treating the core-shell type particles with the hydrophobizing agent.

### [Fourth step]

10 g of the resulting aqueous dispersion of the core-shell type particles was heated and dried on an Si wafer at temperature of 50°C. Subsequently, resulting white powder was transferred into a glass bottle, 10 g of toluene was added thereto, and the mixture was stirred for one hour. Then, 0.3 g of the toluene layer was sampled, dried, and observed using the scanning transmission electron microscope. Consequently, an aggregate of hollow particles having the number average particle diameter of 38 nm was identified. The toluene layer was left to stand for one day, and visually observed. Consequently, no powder was dispersed, and the particles remained to be the aggregate in precipitate.

Hereinafter, a third comparative example will be described.

### [First step to second step]

The first step and the second step were carried out in the same manner as in the first exemplary embodiment.

### [Third step]

In the third comparative example, the forth step was carried without treating the core-shell type particles with the hydrophobizing agent.

### [Fourth step]

The fourth step was carried out in the same manner as in the first exemplary embodiment, except that the aromatic organic solvent to be used in the fourth step was changed to n-octane (special grade, manufactured by Wako Pure Chemical Industries, Ltd.). No precipitate was identified in an n-octane layer obtained in the fourth step, and particles were dispersed. Then, 0.3 g of the stirred n-octane layer was sampled, dried, and observed using the scanning transmission electron microscope. Consequently, core-shell type particles having the number average particle diameter of 38 nm and the polydispersity index of 0.019 were identified.

Hereinafter, a fourth comparative example will be described.

### [First step]

The first step was carried out in the same manner as in the first exemplary embodiment.

### [Second step]

The second step was carried out in the same manner as in the first exemplary embodiment, except that the stirring time period in the first exemplary embodiment was changed to 72 hours. Core-shell type particles having the average shell thickness of 15 nm, the number average particle diameter of 60 nm, and the polydispersity index of 0.016 were obtained.

### [Third step to fourth step]

The third step and the fourth step were carried out in the same manner as in the first exemplary embodiment. No precipitation was identified in the resulting toluene layer, and the particles were dispersed. Then, 0.3 g of the stirred toluene layer was sampled, dried, and observed using the scanning transmission electron microscope. Consequently, the core-shell type particles having the number average particle diameter of 60 nm and the polydispersity index of 0.016 were identified.

Hereinafter, a sixth exemplary embodiment will be described.

### [First step to fourth step]

The first step to the fourth step were carried out in the same manner as in the first exemplary embodiment.

### [Fifth step]

The solvent in the resulting dispersion of the hollow particles was replaced with a silica sol-gel solution (ELCOM CN-1013 manufactured by JGC Catalysts and Chemicals Ltd.), and then resulting dispersion was coated on BK-7 glass (base material) by spin coating so that the thickness became 110 nm, to form an antireflective film. A refractive index of the antireflective film was measured using a spectroscopic ellipsometer (VASE model manufactured by J. A. Woollam Co., Inc.), and it was 1.26. A transmittance at a wavelength of 589 nm was measured using a spectrophotometer (U-4000 manufactured by Hitachi High-Tech Fielding Corporation), and a reflectance was 0.06%. Thus, the film had a function of an antireflective film for an optical element.

Subsequently, scattering was evaluated as follows. A base material holder was placed so that the BK-7 glass was always positioned at the same position. A luminometer (T-10M manufactured by Konica Minolta Sensing, Inc.) was attached to the base material holder, and, while an illuminance was measured, the surface of the base material was irradiated with white light so that the illuminance in a perpendicular direction was 4000 lux. Subsequently, the base material with the antireflective film was placed so that a side irradiated with the white light was a surface on which a film was formed. The placed base material was tilted at 45°, and photographed by a camera (lens: EF50 mm, F2. 5 compact macro, manufactured by Canon Inc., camera: EOS-7D manufactured by Canon Inc.) in a normal direction of a side opposite to an irradiated side. The photographing by the camera was performed under a condition of ISO400, white balance: clear, stop: 20, and shutter speed: 10 seconds. An average luminance value was calculated for any four sites of 700 pix x 700 pix on the base material surface on the photographed image, and was used as a scattering value to evaluate the scattering. The scattering value was 13.1.

Hereinafter, a fifth comparative example will be described.

### [First step to Fourth step]

The first step to the fourth step were carried out in the same manner as in a second comparative example.

### [Fifth step]

The solvent of the resulting aggregate of the hollow particles was replaced with a silica sol-gel solution (ELCOM CN-1013 manufactured by JGC Catalysts and Chemicals Ltd.), and the resulting dispersion was coated on BK-7 glass by spin coating. The scattering value of the film was measured, and it was 210.

The hollow particle produced by the exemplary embodiments of the present invention can be used suitably for the optical elements mounted in imaging equipment including cameras and video cameras, and projecting equipment including light scanning apparatuses of liquid crystal projectors and electrophotographic machines as well as devices that do not need reflected light on an interface with air.

According to the exemplary embodiments of the present invention, it is possible to manufacture the dispersion of the hollow particles, the aggregation of which is inhibited in the liquid. The use of such hollow particle can reduce the scattering more effectively than the use of the conventional hollow particle.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A method for manufacturing a dispersion of hollow particles, the method comprising:
producing a core-shell type particle by forming a shell made mainly of an inorganic-based compound on a surface of a particle made mainly of an organic compound in an aqueous medium, and
obtaining the dispersion of the hollow particles formed of the shell by hydrophobizing the core-shell type particles and extracting the core-shell type particles with an aromatic organic solvent.

2. A method for manufacturing the dispersion of the hollow particles according to claim 1, wherein an average shell thickness of the core-shell type particles is 2 nm or more and 10 nm or less.

3. A method for manufacturing the dispersion of the hollow particles according to claim 1 or 2, wherein the hydrophobizing treatment is a treatment with one of a silane coupling agent and a silylation agent.

4. A method for manufacturing the dispersion of the hollow particles according to any one of claims 1 to 3, wherein the core-shell type particle has a number average particle diameter of 20 nm or more and 210 nm or less.

5. A method for manufacturing the dispersion of the hollow particles according to any one of claims 1 to 4, wherein the shell in the core-shell type particle is made mainly of a unit represented by R_{y}SiO_{z}, where R represents a hydrocarbon group, 0≤y≤1, 1≤z≤2.

6. A method for manufacturing the dispersion of the hollow particles according to any one of claims 1 to 5, wherein the inorganic-based compound is a siloxane compound.

7. A method for manufacturing the dispersion of the hollow particles according to any one of claims 1 to 6, wherein a polydispersity index of the hollow particles is 0.200 or less.

8. A method for manufacturing an antireflective film, the method comprising:
obtaining a dispersion of hollow particles by the method according to any one of claims 1 to 7; and
producing the antireflective film by applying the dispersion of the hollow particles on a base material.

9. A method for manufacturing an optical element, the method comprising:
obtaining a dispersion of hollow particles by the method according to any one of claims 1 to 7; and
producing the optical element including an antireflective film by applying the dispersion of the hollow particles on the optical element.
